# EUROPÄISCHE PATENTSCHRIFT

(11) **EP 2 097 239 B1**
(45) Veröffentlichungstag und Bekanntmachung des Hinweises auf die Patenterteilung: **16.03.2016**
(21) Anmeldenummer: 07822509.1
(22) Anmeldetag: 12.11.2007
(51) Int. Cl.: B29C 45/76, G05B 19/425

(54) **VERFAHREN ZUR ABLAUFPROGRAMMIERUNG EINES SPRITZGIESSZYKLUS EINER SPRITZGIESSMASCHINE**
METHOD FOR PROGRAMMING THE PROGRESS OF AN INJECTION MOLDING CYCLE OF AN INJECTION MOLDING MACHINE
PROCÉDÉ DE PROGRAMMATION SÉQUENTIELLE D'UN CYCLE DE MOULAGE PAR INJECTION D'UNE MACHINE À MOULER PAR INJECTION

(30) Priorität: 23.11.2006 DE 102006055330
(43) Veröffentlichungstag der Anmeldung: 09.09.2009
(73) Patentinhaber: KraussMaffei Technologies GmbH, 80997 München (DE)
(72) Erfinder: BETSCHE, Markus, 83026 Rosenheim (DE)
(74) Vertreter: Wilhelm, Ludwig
(86) Internationale Anmeldenummer: PCT/EP2007/062230
(87) Internationale Veröffentlichungsnummer: WO 2008/061910

(56) Entgegenhaltungen:
- EP-A- 0 573 912
- EP-A1- 1 889 129
- WO-A-2005/009719
- DE-A1- 10 246 925
- JP-A- 61 102 227
- "Selogica - the control unit for all ALLROUNDER injection moulding machines" 20020501, 1. Mai 2002 (2002-05-01), Seiten 1-31, XP002305034

## Beschreibung

Die Erfindung betrifft ein Verfahren zur Ablaufprogrammierung eines Spritzgießzyklus einer Spritzgießmaschine gemäß dem Oberbegriff von Anspruch 1.

Aus dem Stand der Technik ist es bekannt, die Programmierung eines Spritzgießzyklus einer Spritzgießmaschine, also den Betrieb einer Spritzgießmaschine, mittels einer frei programmierbaren Steuerung (SPS) an der Spritzgießmaschine selbst (online) oder losgelöst von der Spritzgießmaschine an einem separaten Terminal (offline) vorzunehmen. Bei der online-Programmierung steht die Spritzgießmaschine über einen größeren Zeitraum nicht für die Produktion zur Verfügung. Bei der offline-Programmierung ist in der Regel nur ein kurzer Stillstand der Spritzgießmaschine zu verzeichnen, um letzte Feinabstimmungen bei der Programmierung vorzunehmen.

Bei solchen frei programmierbaren Steuerungen handelt es sich in der Regel um Datenverarbeitungsprogramme zum Einrichten und Betreiben einer Spritzgießmaschine. Jeder Hersteller einer Spritzgießmaschine bietet in der Regel eine auf sein Maschinenprogramm zugeschnittene frei programmierbare Steuerung an. Bei diesen Steuerungen ist der Ablauf eines Spritzgießzyklus jedoch nicht veränderbar bzw. nur unter Zuhilfenahme des Maschinenherstellers. Der Anwender bzw. Verarbeiter kann eine Programmierung nicht vornehmen.

Weiterentwicklungen hierzu sind frei programmierbare Ablaufsteuerungen. Hierbei werden dem Verarbeiter bzw. Anwender in der Steuerung Werkzeuge zur Verfügung gestellt, mit denen er den Ablauf eines Spritzgießzyklus aus vorgegebenen Elementen (Makros) zusammenstellen kann. Solche frei programmierbaren Ablaufsteuerungen sind in der Zeitschrift "Kunststoffe", Ausgabe 08/2003, Seiten 46 - 49, beschrieben.

Ein Verarbeiter, der Spritzgießmaschinen verschiedener Hersteller im Einsatz hat, muss sich mit unterschiedlichen frei programmierbaren Ablaufsteuerungen auskennen, um alle Verfahrensabläufe und Bewegungen, die für die Herstellung eines bestimmten Produkts erforderlich sind, richtig programmieren zu können.

Bereits eine frei programmierbare Ablaufsteuerung eines einzigen Herstellers ist nicht leicht zu beherrschen; und wenn sich eine Person nicht regelmäßig mit dem Programm beschäftigt, und erst nach einer längeren Zeit ein neuer Ablauf programmiert werden muss (weil z.B. ein anderes Produkt hergestellt werden soll), muss sich erneut in dieses Programm eingearbeitet werden, was mit nicht unerheblichem Zeitaufwand verbunden ist. Ungleich schwieriger ist die Situation, wenn Spritzgießmaschinen verschiedener Hersteller programmiert werden müssen und somit verschiedene frei programmierbare Ablaufsteuerungen beherrscht werden sollen.

Eine gewisse Hilfestellung bei der Programmierung eines Ablaufs einer Spritzgießmaschine bieten Ablaufdiagramme von Werkzeugherstellern. In solchen Ablaufdiagrammen ist detailliert beschrieben und dargestellt, wann welches Teil eines Werkzeugs welche Bewegung machen muss, damit am Ende das Formteil richtig hergestellt worden ist und fehlerfrei aus dem Werkzeug entnommen werden kann. Allerdings müssen auch diese Ablaufdiagramme noch in die frei programmierbare Steuerung (SPS) eingegeben oder in die "richtige" Ablaufprogrammierung umgesetzt werden, was gewisse Kenntnisse über diese Steuerungen voraussetzt. Im übrigen sind nicht zu jedem Werkzeug solche Ablaufdiagramme verfügbar. Darüber hinaus können Fehler auftreten, wenn Angaben von Positionen wie "vorgefahren" und "zurückgefahren" oder "eingefahren" und "ausgefahren" nicht eindeutig sind. Dabei ist zu berücksichtigen, dass das Bedienpersonal häufig nicht über Fachkenntnisse zu den Spritzgießmaschinen oder Werkzeugen verfügt.

Das grundsätzliche Problem aller frei programmierbaren Steuerungen (SPS) sowie der zuvor genannten frei programmierbaren Ablaufsteuerungen besteht darin, dass zunächst der gesamte Spritzgießzyklus in die Steuerung eingegeben wird und dann als Ganzes abgefahren wird, ohne den Zyklus oder einzelne Abschnitte davon gefahrlos testen zu können. Fehler ziehen aber in vielen Fällen schwerwiegende Werkzeugschäden nach sich.

Um das Programmieren von Maschinen zu vereinfachen, sind sogenannte "Teach-Systeme" oder "Teach-In-Systeme" bekannt. Hierbei handelt es sich um Hilfsmittel, die die Programmierung von komplizierten Maschinen erleichtern sollen und in der Regel keine Programmierkenntnisse oder Kenntnisse über die Steuerung der Maschine voraussetzen. Aus der DE 199 00 117 A1 ist ein Teach-In-System zur Programmierung von Schleifmaschinen oder anderweitigen Werkzeugmaschinen bekannt. Dieses Teach-In-System verfügt über eine grafische Benutzeroberfläche zur visuellen Darstellung von Rohlingen, Werkstücken und Werkzeugen. Die dargestellten Elemente sind durch entsprechende Bedienelemente willkürlich in Bezug aufeinander verschiebbar. Die sich ergebenen Verschiebungen werden von dem Teach-In-Modul aufgezeichnet und in ein Maschinensteuerprogramm übersetzt oder es wird ein vorhandenes Maschinensteuerprogramm anhand der Verschiebungen verändert. Es handelt sich um ein sogenanntes virtuelles Teach-In-System.

Auf dem Gebiet von programmgesteuerten Industrierobotern sind weitere Teach-In-Verfahren und Teach-In-Systeme bekannt, um der Steuerung des Roboters die Bewegung eines Manipulatorarms in Bezug auf ein Werkstück zu lehren (Teachen des Roboters). Hierbei wird von Hand die gewünschte Bewegung des Roboters in ein Eingabegerät eingegeben, und zwar numerisch oder graphisch. Ein Datenverarbeitungsprogramm wandelt diese Eingabewerte in ein "Bewegungsprogramm" für den Industrieroboter um, d.h. der Bewegungsablauf wird automatisch programmiert. Solche Teach-In-Systeme für Industrieroboter sind beispielsweise aus EP 0 792 726 B1 und US 4,224,501 bekannt. Aus der EP 1 048 995 A2 ist desweiteren ein virtuelles Teach-In-System für einen Roboter zur Entnahme von Spritzgußteilen aus dem Formwerkzeug einer Spritzgießmaschine bekannt.

Aus der US 4,696,632 ist ein Teach-In-Verfahren bei einer Spritzgießmaschine bekannt, bei dem eine bewegliche Formhälfte aus einer Schließstellung in eine Offenstellung verfahren wird, wobei Positionen geteacht werden, an denen die bewegliche Formhälfte je nach Bewegungsrichtung beschleunigt oder verzögert werden soll, damit die jeweils gewünschte Endposition korrekt angefahren wird.

Die JP61102227A1 offenbart ein weiteres Teach-In-Verfahren bei einer Spritzgießmaschine, wobei in einem Teach-Modus Teile der Spritzgießmaschine bewegt und Positionen geteacht werden.

Auch die EP 0 573 912 A offenbart ein Teach-In-Verfahren bei einer Spritzgießmaschine.

Ausgehend hiervon liegt der Erfindung die Aufgabe zugrunde, ein Verfahren anzugeben, mit dem die Ablaufprogrammierung eines vollständigen Spritzgießzyklus einer Spritzgießmaschine vereinfacht wird und das unabhängig von herstellerspezifischen Programmen und somit universell bei jeder Spritzgießmaschine einsetzbar ist.

Die Lösung dieser Aufgabe erfolgt durch ein Verfahren mit den Merkmalen von Anspruch 1. Vorteilhafte Ausgestaltungen und Weiterentwicklungen finden sich in den Unteransprüchen.

Dadurch dass die Sequenzen des Spritzgießzyklus zunächst in einem Einrichtmodus von Hand abgefahren und auf ihre Funktionalität überprüft werden, und nachfolgend die überprüften Teile im Teach-Modus dem gewünschten Bewegungsablauf entsprechend erneut betätigt werden, wobei dieser Bewegungsablauf in einer Steuerung der Spritzgießmaschine gespeichert wird, können zum Einen bereits vor dem Teachen Störungen erkannt und behoben werden und zum Anderen sieht die Bedienperson wohin die Teile der Spritzgießmaschine bewegt werden, so dass es unerheblich ist, wie bestimmte Richtungen oder Positionen bezeichnet werden. Beispielsweise kommt es nicht darauf an, was unter "Kern eingefahren" oder "Kern ausgefahren" zu verstehen ist. Damit werden Fehler vermieden, wie sie bei frei aber händisch programmierbaren Steuerungen auftreten können, wenn Begriffe wie "eingefahren" und "ausgefahren" missverstanden werden und nach Ende der vollständigen Programmierung der ganze Bewegungsablauf auf einmal abgefahren wird. Außerdem kann eine Bedienperson ohne tiefgehende Kenntnisse der Steuerung auch komplizierte Abläufe realisieren; man muss lediglich den Ablauf der Teile der Spritzgießmaschine kennen. Da beim Einrichtmodus und beim Teach-Modus die auftretenden Kräfte bei der Bewegung der Teile der Spritzgießmaschine drastisch reduziert sind, können bei eventuell auftretenden Fehlern keine oder nur geringe Schäden entstehen.

Vorteilhafterweise können von der Spritzgießmaschine auszuführende Aktionen, wie beispielsweise Schließkraftaufbau oder Schließkraftabbau, oder auch Erzeugung von Nachdruck mit der Schnecke, im Teach-Modus während des Teachen des Bewegungsablaufs mitgeteacht werden. Ebenso können im Teach-Modus Startbedingungen zum Auslösen von Zusatz- oder Nebenfunktionen gesetzt werden. Beispielsweise kann geteacht werden, dass das Vorwärtsfahren der Spritzeinheit und Andocken derselben an der feststehenden Formhälfte nur beim ersten Zyklus erfolgen soll.

Die im Teach-Modus mit den Teilen der Spritzgießmaschine angefahrenen Positionen, beispielsweise der beweglichen Werkzeughälfte oder der Plastizierschnecke, können von Hand in ein Bediengerät eingegeben werden. Sie können aber auch automatisch erkannt werden, beispielsweise über Positionssensoren, und dann automatisch mitgeteacht werden.

Bedarfsweise können für Aktionen, die von Teilen der Spritzgießmaschine ausgeführt werden sollen, repräsentative physikalische Größen während des Teachens der Aktion auf einem Bildschirm dargestellt werden. Dabei können gegebenenfalls Soll- und Toleranzwerte für diese physikalischen Größen auf dem Bildschirm mit dargestellt werden. Auf diese Weise kann die Bedienperson am Bildschirm verfolgen, ob sie beim Teachen dieser Aktion innerhalb der vorgegebenen Toleranzwerte bleibt. Beispielsweise kann der Verlauf des Schließdrucks bzw. der Schließkraft F über die Zeit t angezeigt werden.

Wenn das Teachen abgeschlossen ist, kann eine Optimierung des Bewegungsablaufs vorgenommen werden, indem die Bedienperson den Spritzgießzyklus einmal automatisch ablaufen lässt und anschließend Veränderungen in den zu optimierenden Parametern vornimmt. Beispielsweise könnte eine Verfahrbewegung eines Auswerfers oder eines Kernzugs schneller ausgeführt werden, wozu beispielsweise bei hydraulischen Spritzgießmaschinen die Ölmenge entsprechend zu erhöhen ist.

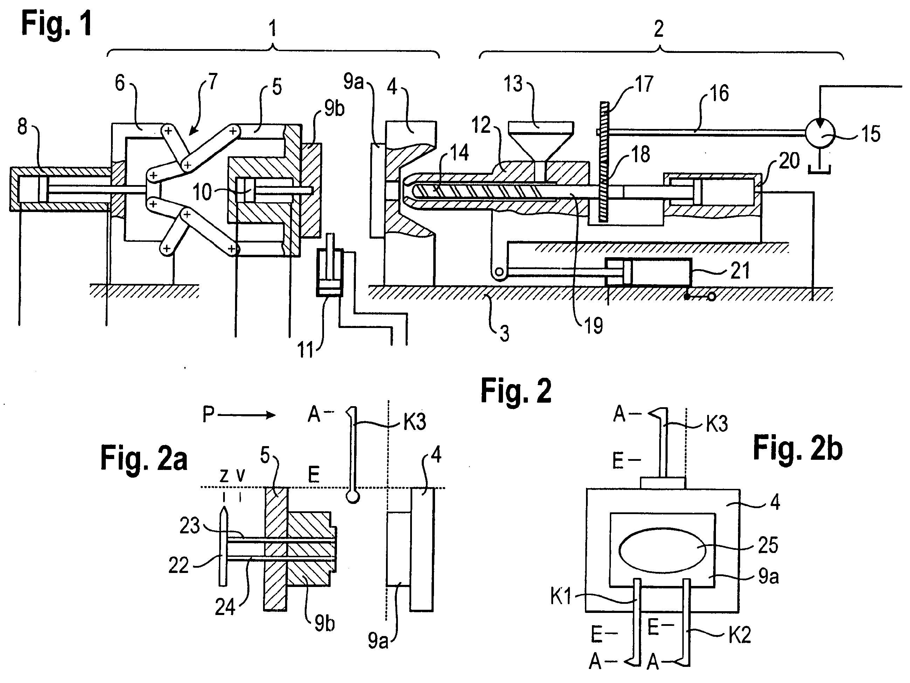

Nachfolgend soll die Erfindung anhand eines Ausführungsbeispiels und unter Bezugnahme auf die Figuren 1 bis 5 näher beschrieben werden.

Die in Figur 1 schematisch dargestellte, an sich bekannte, hydraulisch betriebene Spritzgießmaschine umfasst eine Schließeinheit 1 und eine Spritzeinheit 2, die von einem Maschinenbett 3 getragen werden. Die Schließeinheit 1 umfasst eine feststehende Formaufspannplatte 4 mit einer feststehenden Formhälfte 9a, eine bewegliche Formaufspannplatte 5 mit einer beweglichen Formhälfte 9b, eine Abstützplatte 6, einen Kniehebelmechanismus 7 sowie einen Hydraulikzylinder 8 (Schließzylinder) zum Betätigen des Kniehebelmechanismus. Mit dem Hydraulikzylinder 8 kann die bewegliche Form-aufspannplatte 5 verfahren und der erforderliche Schließdruck aufgebaut werden. Es ist auch möglich, zum Verfahren der beweglichen Formaufspannplatte einerseits und zum Erzeugen des erforderlichen Schließdrucks andererseits separate Hydraulikzylinder vorzusehen. Desweiteren sind ein Hydraulikzylinder 10 zum Betätigen eines Auswerfers und ein oder mehrere Hydraulikzylinder 11 zum Betätigen von Kernzügen vorgesehen. Die Spritzeinheit 2 umfasst im wesentlichen einen Plastifizierzylinder 12 mit einem Einfülltrichter 13 zum Zuführen von Kunststoffgranulat sowie eine dreh- und linearangetriebene Plastifizierschnecke 14. Als Drehantrieb dient ein Hydromotor 15, dessen Drehbewegung über eine Welle 16, Zahnräder 17 und 18 auf die Antriebswelle 19 der Plastifizierschnecke 14 übertragen wird. Als Linearantrieb dient ein mit der Antriebswelle 19 gekoppelter Hydraulikzylinder 20 (Einspritzzylinder). Mittels eines weiteren Hydraulikzylinders 21 (Anlegezylinder) kann die gesamte Spritzeinheit 2 auf dem Maschinenbett 3 verfahren werden. Nicht dargestellt ist ein an sich bekannter Roboter zur Entnahme von spritzgegossenen Formteilen.

In der Figur 2 ist schematisch ein Ausführungsbeispiel eines Spritzgießwerkzeugs mit einem Auswerfer mit zwei Auswerferstangen sowie mit drei Kernzügen dargestellt. Die feststehende Formhälfte 9a ist auf der feststehenden Formaufspannplatte 4 und die bewegliche Formhälfte 9b auf der beweglichen Formaufspannplatte 5 befestigt. An der beweglichen Formaufspannplatte 5 ist eine Auswerferplatte 22 mit zwei Auswerferstangen 23 und 24 angeordnet, die zwischen einer zurückgezogenen Position z und einer vorgefahrenen Position v hin- und her verfahren werden kann. Des weiteren sind drei Kernzüge K1, K2 und K3 vorgesehen, die zu unterschiedlichen Zeiten des Spritzgießzyklus in eine Kavität 25 oder zwischen die Formhälften 9a und 9b ein- und ausgefahren werden können. Die ausgefahrene Position ist vorliegend mit A und die eingefahrene Position mit E bezeichnet. In dem hier vorliegenden Beispiel ist eine Kavität 25 in der feststehenden Formhälfte 9a des Spritzgießwerkzeugs 9 ausgebildet. Die linke Darstellung gemäß Figur 2a entspricht einem Längsschnitts durch die Schließeinheit der Spritzgießmaschine und die rechte Darstellung gemäß Figur 2b ist eine Aufsicht auf die feststehende Formhälfte 9a aus Richtung des Pfeils P.

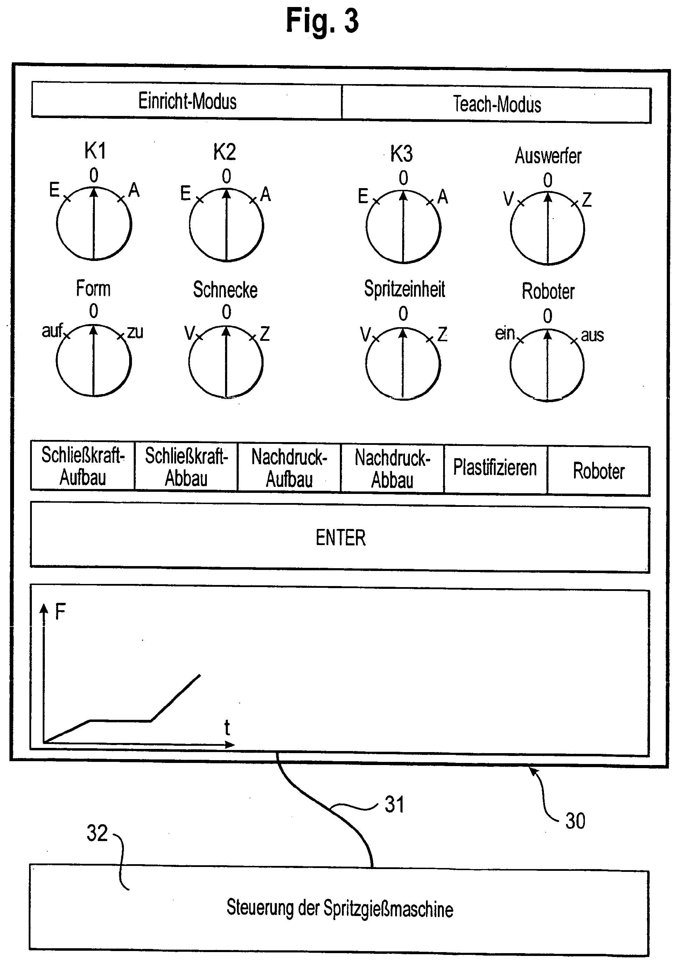

Figur 3 zeigt ein Bediengerät 30 zum Abfahren des Spritzgießzyklus im Einrichtmodus und im Teach-Modus. Das Bediengerät ist über eine Leitung 31 mit der Steuerung 32 der Spritzgießmaschine verbunden; ebenso ist auch eine kabellose Datenübertragung von dem separaten Bediengerät 30 zu der Steuerung 32 der Spritzgießmaschine möglich. Das Bediengerät verfügt über drei Schalter für die Betätigung der Kerne K1, K2 und K3, einen Schalter zum Auf- und Zufahren der Formhälften, Schalter zum Vor- und Zurückbewegen der Auswerferplatte 22, der Plastifizierschnecke 14, und der gesamten Spritzeinheit 2. Die Bestätigung und das Abspeichern der angefahrenen Positionen kann über eine "ENTER"-Taste erfolgen. Desweiteren sind Schalttasten oder Schaltflächen zum Ausführen und Teachen von Aktionen vorgesehen. In dem vorliegenden Beispiel handelt es sich um Schalttasten bzw. Schaltflächen für den Auf- und Abbau von Schließkraft, Auf- und Abbau von Nachdruck, Plastifizieren (Rotation der Plastifizierschnecke), Anwahl des Roboters. Desweiteren weist das Bediengerät eine Bildschirm auf, auf dem bestimmte Aktionen darstellbar sind, beispielsweise der Verlauf der Schließkraft F über die Zeit t. Anstelle der Verwendung eines separaten Bedienterminals kann die Ablaufprogrammierung auch an der Steuerung 32 selbst erfolgen.

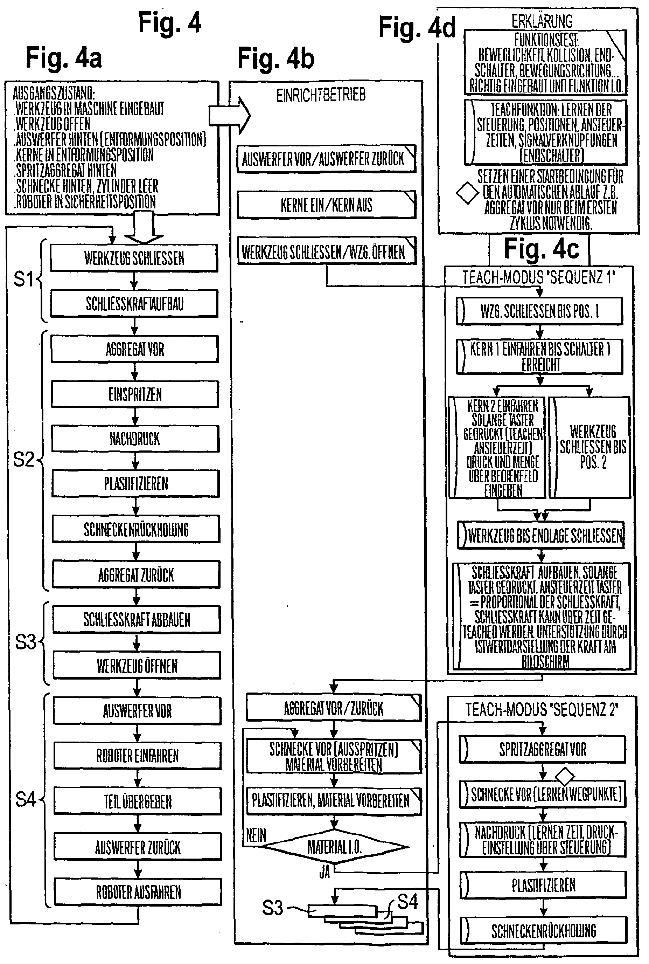

Anhand der Figur 4 soll nachfolgend die Ablaufprogrammierung der Spritzgießmaschine erläutert werden. In der linken Spalte (Spalte 1 = Figur 4a) sind die Schritte angegeben die bei einem Spritzgießzyklus auszuführen sind, wobei mehrere Schritte Sequenze S1 bis S4 bilden. In der mittleren Spalte (Spalte 2 = Figur 4b) sind diejenigen Sequenzen bzw. Schritte angegeben, die im Einrichtmodus der Spritzgießmaschine von Hand abgefahren werden. In der rechten Spalte (Spalte 3 = Figur 4c) sind diejenigen Sequenzen bzw. Schritte angegeben, die im Teach-Modus der Spritzgießmaschine von Hand abgefahren werden. In dem Kästchen von Figur 4d ist die Bedeutung der in den Flußdiagrammen von Figur 4b und 4c verwendeten Symbole erläutert.

Es soll von einer Situation ausgegangen werden, wie sie nachfolgend beschrieben ist. Das Spritzgießwerkzeug ist in die Spritzgießmaschine eingebaut, d.h. die Formhälften 9a, 9b sind auf den Formaufspannplatten 4 und 9 befestigt. Die Schließeinheit 1 befindet sich in geöffnetem Zustand. Die Auswerferplatte 22 und die Kerne K1, K2 und K3 befinden sich jeweils in ihren hinteren Positionen, d.h. die Auswerferplatte 22 in der zurückgefahrenen Position z und die Kerne in den ausgefahrenen Positionen A. Das Spritzaggregat 2 befindet sich ebenfalls in einer zurückgefahrenen Position, in der die Einspritzdüse von der feststehenden Formhälfte abgehoben ist und einen Abstand zu dieser bildet. Die Plastifizierschnecke, nachfolgend auch nur Schnecke genannt, befindet sich in einer hinteren Position, d.h. der Einspritzzylinder 20 ist leer. Der Roboter befindet sich in einer Sicherheitsposition außerhalb der Schließeinheit. Diese Positionen bzw. Zustände werden in der Steuerung der Spritzgießmaschine als Ausgangspositionen gespeichert.

Ausgehend von dieser Situation wird an dem Bediengerät 30 zunächst der Einrichtmodus der Spritzgießmaschine angewählt, wozu die so beschriftete Schaltfläche gedrückt wrid. Im Einrichtmodus werden nun zunächst der Auswerfer, die Kerne und die Schließeinheit auf ihre Funktionalität hin überprüft. Hierzu wird zunächst die Auswerferplatte 22 durch Hin- und Herschalten des entsprechenden Schalters zwischend den Positionen z und v mehrmals hin- und herbewegt. In gleicher Weise werden die Kerne K1, K2 und K3 durch Hin- und Herschalten der entsprechenden Schalter zwischen den Positionen A und E mehrmals hin- und herbewegt. Nachfolgend wird die bewegliche Formaufspannplatte durch Hin- und Herschalten des entsprechenden Schalters ein oder mehrmals auf- und zugefahren. Dies dient der Kontrolle von Bewegungsrichtung und Endlagensignalen (Endschaltern). Wenn die bewegten Teile ordnungsgemäß funktionieren, wird in den Teach-Modus gewechselt, wozu die so beschriftete Schaltfläche des Bediengeräts 30 gedrückt wird.

Nunmehr kann mit dem Teachen der ersten Sequenz S1 des Spritzgießzyklus begonnen werden. Der Schalter für die bewegliche Formhälfte wird aus der "Stopp"-Stellung in die "Vor"-Stellung gedreht und als Folge davon der Hydraulikzylinder 8 mit Hydraulikflüssigkeit beaufschlagt. Infolgedessen wird die bewegliche Formaufspannplatte und mit ihr die bewegliche Formhälfte nach vorne auf die feststehende Formhälfte 9a zubewegt. Wenn ein vorgegebene Position P1 erreicht ist, wird diese Position P1 durch Betätigen der ENTER-Taste in die Steuerung der Spritzgießmaschine eingelesen. An dieser Position P1 soll ein Kern K1 bis zum Erreichen einer Endposition eingefahren werden. Hierzu wird der dem Kern K1 zugeordnete Schalter K1 in die E-Position gedreht und damit der zugehörige Hydraulikzylinder betätigt. Der Kern K1 wird nunmehr eingefahren, wobei das Ende des Einfahrens durch einen Endlagenschalter erkannt und automatisch in der Steuerung gespeichert wird. Die Kernfunktion kann sowohl separat (ohne Bewegung der Formhälfte), als auch parallel zur Formhälfte (Kern und Schließtaster werden gleichzeitig betätigt) geteachet werden. Alternativ dazu kann beim Erreichen der eingefahrenen Position auch die ENTER-Taste betätigt und diese Position des Kerns K1 händisch geteacht werden. Nachfolgend wird die bewegliche Formaufspannplatte weiter nach vorne verfahren, bis eine Position P2 erreicht ist, welche durch Betätigen der ENTER-Taste in die Steuerung eingelesen wird. Parallel dazu wird ein Kern K2 eingefahren, wozu der Schalter K2 in die Position E gedreht wird. Die Wegstrecke, die der Kern K2 zurücklegen soll, kann wie oben über einen Endlagenschalter erkannt und automatisch geteacht werden. Das Teachen kann aber auch über die Zeit für das Ansteuern des Kerns K1 erfolgen, d.h. solange der Schalter in der Position E gehalten wird, wird der zugehörige Hydraulikzylinder mit einer bestimmten Ölmenge unter einem bestimmten Druck versorgt, wobei Ölmenge und Druck über eine Tastatur eingegeben werden können, gegebenenfalls auch schon vor dem Beginn der Ablaufprogrammierung. Nachfolgend wird die bewegliche Formaufspannplatte weiter vorgefahren, bis die Formhälften 9a und 9b geschlossen sind, d.h. bis sie in der Trennebene auf Plattenberührung stehen. Diese Position P3 wird ebenfalls durch Betätigung der ENTER-Taste in die Steuerung eingelesen. An dieser Position P3 wird zugleich die Aktion "Schließkraftaufbau" geteacht. Dies kann in der Weise erfolgen, dass die zugehörige Schaltfläche an dem Bediengerät solange gedrückt wird, bis ein gewünschter Wert der Schließkraft erreicht ist. Hierzu kann auf einem Bildschirm an dem Bediengerät oder an der Steuerung der Verlauf der Schließkraft über der Zeit angezeigt werden. Neben der Darstellung des Ist-Wert-Verlaufs können auch Soll- und/oder Toleranzwerte in dem gleichen Maßstab auf demselben Bildschirm angezeigt werden. Auf diese Weise sieht die Bedienperson, ob sie sich innerhalb vorgegebener Grenzen bewegt. Beim Erreichen der gewünschten Schließkraft wird die Schaltfläche "Schließkraftaufbau" losgelassen, womit das Teachen dieser Aktion beendet ist. Mit diesem letzten Schritt ist das Teachen der ersten Sequenz S1 des Spritzgießzyklus abgeschlossen.

Vor dem Teachen der zweiten Sequenz S2 wird von dem Teach-Modus in den Einrichtmodus gewechselt (Figur 4b). Durch Betätigen des Schalters für das Spritzaggregat wird der Hydraulikzylinder 21 mit Hydraulikflüssigkeit beaufschlagt und je nach Schalterstellung kann das Spritzaggregat an die feststehende Formhälfte 9a heran und von dieser weg verfahren werden. Dieser Vorgang kann einmal oder mehrmals durchgeführt werden. Wenn sich das Spritzaggregat wieder in einer hinteren Position befindet, wird der Einspritzzylinder 20 durch Betätigen des zugehörigen Schalters mit Hydraulikflüssigkeit beaufschlagt und die Schnecke nach vorne verfahren, wobei schon eventuell aufgeschmolzenes Kunststoffmaterial ausgespritzt wird. Nachfolgend wird der Hydromotor 15 betätigt und die Schnecke in eine Drehbewegung versetzt. Dabei wird Kunststoffgranulat in bekannter Weise eingezogen, aufgeschmolzen und in den Schneckenvorraum gefördert, wobei die Schnecke gleichzeitig nach hinten verschoben wird. Ist genügend Kunststoffschmelze im Schneckenvorraum angesammelt, wird der Einspritzzylinder 20 erneut betätigt, wobei die Schnecke nach vorne verfahren und Schmelze ausgespritzt wird. Das ausgespritzte Material wird geprüft. Entspricht das Prüfungsergebnis nicht den Erwartungen (Material i.O. = nein), werden die Schritte "Plastifizieren, Material vorbereiten, Schnecke vor, Material ausspritzen" wiederholt und zwar so oft, bis das Material den Vorgaben entspricht (Material i.O. = ja).

Wenn das Ergebnis "Material i.O. = ja" vorliegt, kann die zweite Sequenz S2 des Spritzgießzyklus geteacht werden, die die Spritzeinheit 2 betrifft. Durch Betätigung der Schaltfläche "Tech-Modus" an dem Bediengerät 30 wird vom Einrichtmodus in den Teach-Modus gewechselt. In einem ersten Schritt der Sequenz S2 wird die Vorwärtsbewegung der Spritzeinheit 2 geteacht. Hierzu wird der zugehörige Schalter in die Stellung "vor" gedreht und damit der Hydraulikzylinder 21 betätigt, d.h. das Spritzaggregat nach vorne gefahren. Sobald die Einspritzdüse an die Formhälfte 9a angedockt und eine vorgegebene Düsenanlagekraft erreicht ist, wird die so erreicht Position und der hierbei erreicht Druck im Hydraulikzylinder 21 in der Steuerung gespeichert. Die Position kann über die ENTER-Taste eingegeben werden; der erreichte Druck kann ggf. automatisch in der Steuerung gespeichert werden. Gleichzeitig wird eine Startbedingung gesetzt, dergestalt, dass das Vorfahren der Spritzeinheit 2 nur beim ersten Spritzgießzyklus ausgeführt werden soll. Als nächster Schritt ist die Vorwärtsbewegung der Schnecke zu teachen. Hierbei können je nach gewünschtem Verlauf des Einspritzdrucks verschiedene Positionen der Schnecke geteacht werden. Dies kann analog zum Teachen der Positionen der beweglichen Formhälfte erfolgen. Wenn die vorderste Position der Schnecke geteacht ist, kann die an dieser Position auszuführende Aktion "Erzeugung Nachdruck" geteacht und damit dieser Position zugeordnet werden. Hierbei kann ein Zeit geteacht werden, über die der Nachdruck aufrechterhalten werden soll. Die Höhe des Nachdrucks kann direkt an der Steuerung eingegeben oder schon von Anfang an vorgegeben werden. Nach dem Ende der Nachdruckphase muss mit dem Plastifizieren gestartet und die Schnecke zurückbewegt werden. Dieser Zeitpunkt wird als Ablauf der Zeit für den Nachdruck geteacht und dient zum Starten des Hydromotors 15 einerseits und zum kontrollierten Rückzug des Einspritzzylinders 20 andererseits. Wenn auch die Schneckenrückholung geteacht ist, ist die komplette Sequenz S2 des Spritzgießzyklus im Teach-Modus abgefahren und die zugehörigen Bewegungen und Aktionen sind in der Steuerung geteacht und gespeichert worden.

In analoger Weise werden nachfolgend die Sequenzen S3 und S4 soweit wie erforderlich zunächst im Einrichtmodus von Hand abgefahren und nach bestandener Funktionsprüfung nachfolgend im Teach-Modus.

Am Ende der Ablaufprogrammierung sind alle Sequenzen S1 bis S4 geteacht, d.h. die Ablaufprogrammierung des vollständigen Spritzgießzyklus ist abgeschlossen.

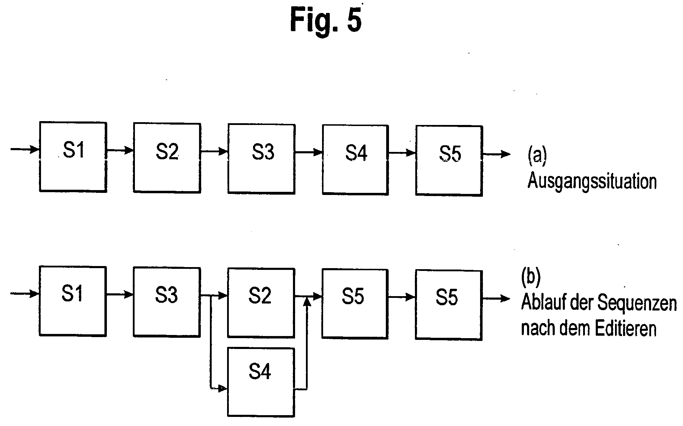

Als Erweiterung besteht die Möglichkeit, die einzeln geteachten Sequenzen in einem geieigneten Editor neu zu kombinieren, sprich die Reihenfolge und eventuell Wiederholungen von Funktionen frei zu gestalten. Dies soll anhand von Figur 5 erläutert werden. Zunächst werden die Sequenzen S1 bis S5 auf die erfindungsgemäße Art und Weise geteacht. Nachfolgend können diese geteachten Sequenzen je nach An wendungsfall in beliebiger Reihenfolge zusammengestellt werden. Dabei kann es auch zu Wiederholungen von Sequenzen kommen. Als Beispiel kann der Auswerfer-Rüttelhub dienen. Die Auswerferbewegung vor und zurück wird nur einmal geteached und beispielsweise als Sequenz S5 abgespeichert; im Editor wird dann die Sequenz mehrmals hintereinander eingefügt.

Sowohl beim Einrichtmodus als auch im Teach-Modus können die Teile der Spritzgießmaschine wahlweise mit reduzierten Kräften (bei hydraulischen Spritzgießmaschinen also mit reduzierten Hydraulikdrücken) oder mit den wirklichen Prozeßwerten (hohe Drücke und Geschwindigkeiten) betätigt werden.

Schließlich ist darauf hinzuweisen, dass Verfahrensparameter wie z.B. Verfahrgeschwindigkeiten, Wartezeiten (z.B. Kühlzeit), Überwachungszeiten, Drücke und dergleichen unmittelbar oder auf Abfrage beim Teachen des Ablaufs in die Maschinensteuerung eingegeben werden können. Es können auch Hilfsprogramme vorgesehen werden, um der Bedienperson die Optimierung des Bewegungsablaufs zu erleichtern.

### Bezugszeichenliste

- 1: Schließeinheit
- 2: Spritzeinheit
- 3: Maschinenbett
- 4: Feststehende Formaufspannplatte
- 5: Bewegliche Formaufspannplatte
- 6: Abstützplatte
- 7: Kniehebelmechanismus
- 8: Schließzylinder
- 9a: Feststehende Formhälfte
- 9b: Bewegliche Formhälfte
- 10: Auswerfer-Hydraulikzylinder
- 11: Kernzug-Hydraulikzylinder
- 12: Plastifiziezylinder
- 13: Einfülltrichter
- 14: Plastifizierschnecke
- 15: Hydromotor
- 16: Motorwelle
- 17: Zahnrad
- 18: Zahnrad
- 19: Schneckenwelle
- 20: Einspritzzylinder
- 21: Anlegezylinder
- 22: Auswerferplatte
- 23: Auswerferstange
- 24: Auswerferstange
- 25: Kavität
- 30: Bediengerät
- 31: Verbindungsleitung
- 32: Steuerung der Spritzgießmaschine

## Patentansprüche

1. Verfahren zur Ablaufprogrammierung eines mehrere Sequenzen umfassenden Spritzgießzyklus einer Spritzgießmaschine, wobei die Sequenzen des Spritzgießzyklus einzeln geteacht werden, wobei die Sequenzen des Spritzgießzyklus zunächst vollständig oder teilweise in einem Einrichtmodus und nachfolgend vollständig oder teilweise in einem Teach-Modus jeweils von Hand abgefahren werden, wobei zunächst im Einrichtmodus Teile der Spritzgießmaschine betätigt und auf ihre Funktionalität überprüft werden, und wobei die überprüften Teile nachfolgend im Teach-Modus dem gewünschten Bewegungsablauf entsprechend erneut betätigt werden, wobei dieser Bewegungsablauf in einer Steuerung der Spritzgießmaschine gespeichert wird.

2. Verfahren nach Anspruch 1,
**dadurch gekennzeichnet,**
**dass** von der Spritzgießmaschine auszuführende Aktionen, wie beispielsweise Schließkraftaufbau oder Schließkraftabbau, im Teach-Modus während des Teachen des Bewegungsablaufs mitgeteacht werden.

3. Verfahren nach Anspruch 1 oder 2,
**dadurch gekennzeichnet,**
**dass** im Teach-Modus Startbedingungen zum Auslösen von Zusatz- oder Nebenfunktionen gesetzt werden.

4. Verfahren nach einem der Ansprüche 1 bis 3,
**dadurch gekennzeichnet,**
**dass** die Funktionalität von Teilen der Schließeinheit überprüft und deren Bewegungsablauf geteacht wird.

5. Verfahren nach einem der Ansprüche 1 bis 4,
**dadurch gekennzeichnet,**
**dass** die Funktionalität von Teilen der Spritzeinheit überprüft und deren Bewegungsablauf geteacht wird.

6. Verfahren nach Anspruch 5,
**dadurch gekennzeichnet,**
**dass** im Einrichtmodus Kunststoffschmelze von der Spritzeinheit ausgeschleust und überprüft wird, und dass erst dann vom Einrichtmodus in den Teach-Modus gewechselt wird, wenn die Kunststoffschmelze vorgebbare Kriterien erfüllt.

7. Verfahren nach einem der Ansprüche 1 bis 6,
**dadurch gekennzeichnet,**
**dass** im Teach-Modus angefahrene Positionen automatisch erkannt und in der Steuerung gespeichert werden.

8. Verfahren nach einem der Ansprüche 1 bis 7,
**dadurch gekennzeichnet,**
**dass** im Teach-Modus Ansteuerzeiten für Teile der Spritzgießmaschine in die Steuerung eingegeben werden.

9. Verfahren nach einem der Ansprüche 2 bis 8,
**dadurch gekennzeichnet,**
**dass** die auszuführende Aktionen über die Eingabe von Zeiten geteacht werden.

10. Verfahren nach einem der Ansprüche 2 bis 9,
**dadurch gekennzeichnet,**
**dass** für die Aktionen repräsentative physikalische Größen während des Teachens der Aktion auf einem Bildschirm dargestellt werden.

11. Verfahren nach Anspruch 10,
**dadurch gekennzeichnet,**
**dass** Soll- und Toleranzwerte für die physikalischen Größen auf dem Bildschirm dargestellt werden.

12. Verfahren nach einem der Ansprüche 1 bis 11,
**dadurch gekennzeichnet,**
**dass** einzelne Sequenzen vollständig oder teilweise unmittelbar im Teach-Modus von Hand abgefahren werden und dieser Bewegungsablauf in einer Steuerung der Spritzgießmaschine gespeichert wird.

13. Verfahren nach einem der Ansprüche 1 bis 12,
**dadurch gekennzeichnet,**
**dass** Peripheriegeräte vorgesehen sind, beispielsweise Roboter, die in den Spritzgießzyklus miteinbezogen werden, wobei deren Teile ebenfalls von Hand im Einrichtmodus und nachfolgend im Teach-Modus betätigt werden und dieser Bewegungsablauf in der Steuerung gespeichert wird.

14. Verfahren nach einem der Ansprüche 1 bis 13,
**dadurch gekennzeichnet,**
**dass** einzeln geteachte Sequenzen mit einem Editor frei kombiniert und wiederholt werden, so dass sich aus einzelnen Bewegungsschritten komplexe Funktionsabläufe erstellen lassen.

## Claims

1. A method for programming the progress of an injection moulding cycle, comprising several sequences, of an injection moulding machine, wherein the sequences of the injection moulding cycle are taught individually, wherein the sequences of the injection moulding cycle are respectively manually started firstly as a whole or in part in a setup mode and subsequently as a whole or in part in a teaching mode, wherein in the setup mode parts of the injection moulding machine are first actuated and are tested as to the functionality thereof, and wherein the tested parts are then actuated once again in the teaching mode according to the desired sequence of movements, wherein this sequence of movements is stored in a controller of the injection moulding machine.

2. The method according to Claim 1,
**characterized in that**
actions to be carried out by the injection moulding machine, such as for example the build-up of clamping force or the reduction of clamping force, are taught together in the teaching mode during the teaching of the sequence of movements.

3. The method according to Claim 1 or 2,
**characterized in that**
in the teaching mode, start conditions are set for the triggering of additional or auxiliary functions.

4. The method according to one of Claims 1 to 3, **characterized in that**
the functionality of parts of the clamping unit is tested and its sequence of movements is taught.

5. The method according to one of Claims 1 to 4,
**characterized in that**
the functionality of parts of the injection unit is tested and its sequence of movements is taught.

6. The method according to Claim 5,
**characterized in that**
in the setup mode, plastic melt is discharged from the injection unit and is tested, and that a change is only made from the setup mode into the teaching mode when the plastic melt fulfils presettable criteria.

7. The method according to one of Claims 1 to 6,
**characterized in that**
positions attained in the teaching mode are automatically detected and stored in the controller.

8. The method according to one of Claims 1 to 7,
**characterized in that**
in the teaching mode, activation times for parts of the injection moulding machine are entered into the controller.

9. The method according to one of Claims 2 to 8,
**characterized in that**
the actions which are to be carried out are taught by means of the input of times.

10. The method according to one of Claims 2 to 9,
**characterized in that**
physical quantities representative for the actions are displayed on a screen during the teaching of the action.

11. The method according to Claim 10,
**characterized in that**
desired and tolerance values for the physical quantities are displayed on the screen.

12. The method according to one of Claims 1 to 11,
**characterized in that**
individual sequences are performed manually as a whole or in part directly in the teaching mode, and this sequence of movements is stored in a controller of the injection moulding machine.

13. The method according to one of Claims 1 to 12,
**characterized in that**
peripheral devices are provided, for example robots, which are included into the injection moulding cycle, wherein the parts thereof are also actuated manually in the setup mode and subsequently in the teaching mode, and this sequence of movements is stored in the controller.

14. The method according to one of Claims 1 to 13,
**characterized in that**
individually taught sequences are freely combined with an editor and are repeated, so that complex functional sequences can be developed from individual movement steps.

## Revendications

1. Procédé de programmation du déroulement d'un cycle de moulage par injection comprenant plusieurs séquences, sachant que les séquences du cycle de moulage par injection sont enseignées individuellement, sachant que les séquences du cycle de moulage par injection sont d'abord lancées complètement ou partiellement dans un mode d'ajustage et ensuite partiellement ou complètement manuellement dans un mode d'apprentissage, sachant que des parties de la machine de moulage par injection sont d'abord actionnées dans le mode d'ajustage et que leur fonctionnalité est vérifiée, et sachant que les parties vérifiées sont ensuite à nouveau actionnées dans le mode d'apprentissage selon la séquence de mouvements souhaitée, sachant que cette séquence de mouvements est mémorisée dans une commande de la machine de moulage par injection.

2. Procédé selon la revendication 1,
**caractérisé en ce que**
des actions à exécuter par la machine de moulage par injection, comme la montée de force de fermeture ou la baisse de force de fermeture, sont enseignées conjointement pendant l'apprentissage de la séquence de mouvements dans le mode d'apprentissage.

3. Procédé selon la revendication 1 ou 2,
**caractérisé en ce que**
des conditions de début pour déclencher des fonctions supplémentaires ou secondaires sont mises en place dans le mode d'apprentissage.

4. Procédé selon l'une des revendications 1 à 3,
**caractérisé en ce que**
la fonctionnalité de parties de l'unité de fermeture est vérifiée et leur séquence de mouvements est enseignée.

5. Procédé selon l'une des revendications 1 à 4,
**caractérisé en ce que**
la fonctionnalité de parties de l'unité d'injection est vérifiée et leur séquence de mouvements est enseignée.

6. Procédé selon la revendication 5,
**caractérisé en ce que**
des fontes de plastique sont évacuées de l'unité d'injection et vérifiées dans le mode d'ajustage et que le passage du mode d'ajustage au mode d'apprentissage se fait seulement lorsque la fonte de plastique respecte des critères prédéfinissables.

7. Procédé selon l'une des revendications 1 à 6,
**caractérisé en ce que**
des positions lancées sont reconnues automatiquement dans le mode d'apprentissage et stockées dans la mémoire.

8. Procédé selon l'une des revendications 1 à 7,
**caractérisé en ce que**
des temps de déclenchement de la machine de moulage par injection sont saisis dans la commande dans le mode d'apprentissage.

9. Procédé selon l'une des revendications 2 à 8,
**caractérisé en ce que**
les actions à exécuter sont enseignées par le biais de la saisie des temps.

10. Procédé selon l'une des revendications 2 à 9,
**caractérisé en ce que**
des grandeurs physiques représentatives des actions sont affichées sur un écran lors de l'apprentissage de l'action.

11. Procédé selon la revendication 10,
**caractérisé en ce que**
des valeurs de consigne et de tolérance des grandeurs physiques sont affichées sur l'écran.

12. Procédé selon l'une des revendications 1 à 11,
**caractérisé en ce que**
des séquences individuelles sont lancées manuellement complètement ou partiellement directement dans le mode d'apprentissage et cette séquence de mouvements est mémorisée dans une commande de la machine de moulage par injection.

13. Procédé selon l'une des revendications 1 à 12,
**caractérisé en ce que**
des appareils périphériques sont prévus, par exemple des robots qui sont intégrés dans le cycle de moulage par injection, sachant que leurs parties sont également actionnées manuellement dans le mode d'ajustage puis dans le mode d'apprentissage, et cette séquence de mouvements est mémorisée dans la mémoire.

14. Procédé selon l'une des revendications 1 à 13,
**caractérisé en ce que**
des séquences enseignées individuellement peuvent être combinées et répétées librement avec un éditeur, de sorte que des séquences fonctionnelles complexes peuvent être créées à partir des différentes étapes de mouvement.
